# EUROPEAN PATENT APPLICATION

(11) **EP 4 387 244 A1**
(43) Date of publication of application: **19.06.2024**
(21) Application number: 22855694.0
(22) Date of filing: 03.03.2022
(51) Int. Cl.: H04N 21/442, H04N 21/472, G06F 3/01, G06F 3/0346, G06F 3/04817

(54) **INFORMATION PROCESSING SYSTEM, AND CONTROL METHOD**

(30) Priority: 10.08.2021 JP 2021130549
(71) Applicant: Sony Group Corporation, Tokyo 108-0075 (JP)
(72) Inventor: MAEDA, Masaki, Tokyo 108-0075 (JP); MATSUZAWA, Takeshi, Tokyo 108-0075 (JP); SAKAI, Shimon, Tokyo 108-0075 (JP); OHNO, Erika, Tokyo 108-0075 (JP); NAKAJIMA, Yohei, Tokyo 108-0075 (JP)
(74) Representative: 2SPL Patentanwälte PartG mbB
(86) International application number: PCT/JP2022/009033
(87) International publication number: WO 2023/017628

(57) **Abstract**

The present technology relates to an information processing system and a control method that enable a gesture-based operation to be performed more easily.

An information processing system according to one aspect of the present technology detects an action of a user, displays a GUI related to an operation using a gesture on the basis of detection of a first gesture made by the user, identifies an operation presented on the GUI on the basis of a second gesture made following the first gesture, and executes a control command corresponding to the identified operation. The present technology is applicable to an operation of a TV to which a camera device is coupled.

## Description

### TECHNICAL FIELD

The present technology relates to an information processing system and a control method, and more particularly relates to an information processing system and a control method that enable a gesture-based operation to be performed more easily.

### BACKGROUND ART

There is a device enabled to perform an operation using a gesture among various devices such as a TV and an audio device. Recognition of the gesture is carried out by, for example, identifying a track of movement of a user hand on the basis of an image captured and obtained by a camera and comparing the identified track of the hand movement with a pre-registered track.

Patent Document 1 discloses a technique of operating a cursor on a screen on the basis of a change in position and posture of a hand tip of a user.

### CITATION LIST

### PATENT DOCUMENT

Patent Document 1: Japanese Patent Application Laid-Open No. 2013-205983

### SUMMARY OF THE INVENTION

### PROBLEMS TO BE SOLVED BY THE INVENTION

In a case where many gestures are prepared as gestures for operating a certain device, the user is required to memorize all the gestures necessary for the operation.

The present technology has been conceived in view of such circumstances, and enables a gesture-based operation to be performed more easily.

### SOLUTIONS TO PROBLEMS

An information processing system according to one aspect of the present technology includes a detection unit that detects an action of a user, a display processing unit that causes a GUI related to an operation using a gesture to be displayed on the basis of detection of a first gesture made by the user, and a control unit that identifies an operation presented on the GUI on the basis of a second gesture made following the first gesture and executes a control command corresponding to the identified operation.

According to one aspect of the present technology, an action of a user is detected, a GUI related to an operation using a gesture is displayed on the basis of detection of a first gesture made by the user, an operation presented on the GUI is identified on the basis of a second gesture made following the first gesture, and a control command corresponding to the identified operation is identified.

### BRIEF DESCRIPTION OF DRAWINGS

Fig. 1 is a diagram illustrating an exemplary operation in an information processing system to which the present technology is applied.
Fig. 2 is an enlarged view of a gesture GUI.
Fig. 3 is a diagram illustrating an exemplary gesture-based operation.
Fig. 4 is a diagram illustrating an exemplary two-step gesture during broadcast wave viewing.
Fig. 5 is a diagram illustrating an exemplary two-step gesture during recorded content viewing.
Fig. 6 is a block diagram illustrating a configuration example of the information processing system.
Fig. 7 is a flowchart for explaining a process of the information processing system.
Fig. 8 is a diagram illustrating exemplary display of the gesture GUI.
Fig. 9 is a diagram illustrating another exemplary display of the gesture GUI.
Fig. 10 is a diagram illustrating exemplary presentation of a track of hand movement.
Fig. 11 is a diagram illustrating exemplary presentation of a hand movement direction.
Fig. 12 is a diagram illustrating exemplary display of a boundary of a recognition region.
Fig. 13 is a diagram illustrating another exemplary display of the boundary of the recognition region.
Fig. 14 is a diagram illustrating an exemplary gesture across a plurality of recognition regions.
Fig. 15 is a diagram illustrating an exemplary display position of the gesture GUI.
Fig. 16 is a diagram illustrating another exemplary display position of the gesture GUI.
Fig. 17 is a diagram illustrating an exemplary change in a display size of the gesture GUI.
Fig. 18 is a diagram illustrating an exemplary change in the display size of the gesture GUI.
Fig. 19 is a diagram illustrating exemplary control of an external device.
Fig. 20 is a diagram illustrating exemplary display of a program guide.
Fig. 21 is a diagram illustrating exemplary control of a display position of a gesture menu.
Fig. 22 is a diagram illustrating exemplary video preview display.
Fig. 23 is a diagram illustrating exemplary presentation of a gesture being recognized.
Fig. 24 is a diagram illustrating exemplary presentation of a gesture being recognized.
Fig. 25 is a block diagram illustrating a hardware configuration example of TV.

### MODE FOR CARRYING OUT THE INVENTION

Hereinafter, modes for carrying out the present technology will be described. The description will be given in the following order.
1. Operation using two-step gesture
2. Configuration of information processing system
3. Operation of information processing system
4. First display example of gesture GUI (Display of hand icon)
5. Second display example of gesture GUI (Presentation of track of hand movement)
6. Third display example of gesture GUI (Display of boundary of recognition region)
7. Fourth display example of gesture GUI (Continuous action)
8. Fifth display example of gesture GUI (Display position control)
9. Sixth display example of gesture GUI (Display size control)
10. Seventh display example of gesture GUI (External device control)
11. Eighth display example of gesture GUI (Control of gesture menu display position)
12. Ninth display example of gesture GUI (Video preview display)
13. Tenth display example of gesture GUI (Display of gesture being recognized)
14. Hardware configuration example of TV
15. Variations
16. Others

### <Operation using two-step gesture>

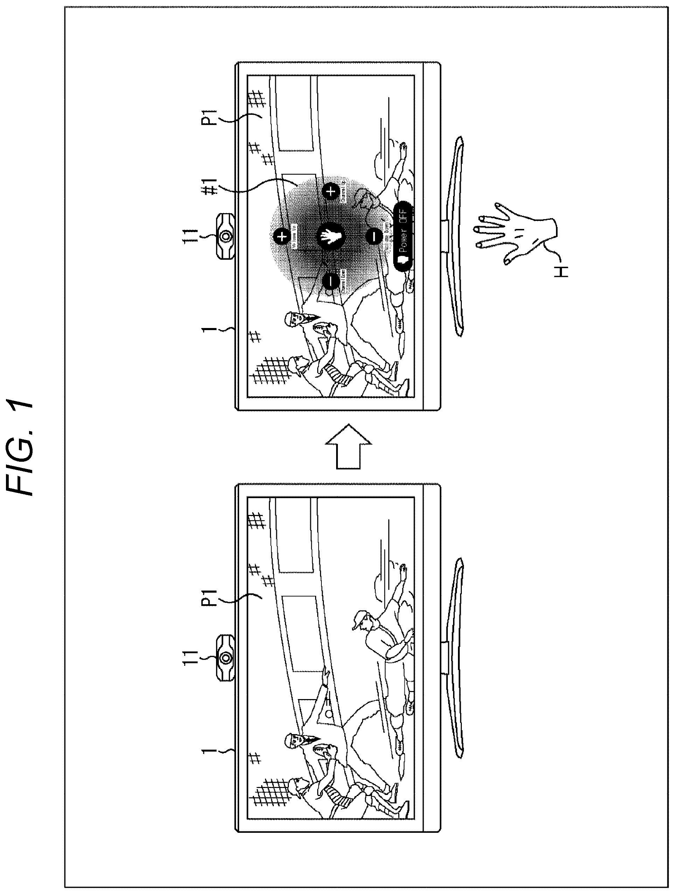

Fig. 1 is a diagram illustrating an exemplary operation in an information processing system according to an embodiment of the present technology.

The information processing system according to an embodiment of the present technology has a configuration in which a camera device 11 is coupled to a television receiver (TV) 1. The camera device 11 may be incorporated in a housing of the TV 1.

For example, a state in front of the TV 1 is constantly imaged by the camera device 11. In a case where a user viewing content is in front of the TV 1, an action of the user is detected by the camera device 11 on the basis of a captured image.

Furthermore, in a case where the user makes a gesture using a part such as a hand or an arm, information indicating a recognition result of the gesture is supplied from the camera device 11 to the TV 1. The camera device 11 has a function of recognizing a gesture of the user.

The TV 1 has not only a function of receiving broadcast waves and displaying video of broadcast content but also a function of displaying various kinds of content video, such as recorded content video reproduced by a recording device (not illustrated) such as a hard disk recorder, and content video distributed in a distribution service on the Internet.

In the example on the left side of Fig. 1, video P1, which is video of broadcast content of a certain channel, is displayed on a display of the TV 1.

In a case where, in such a state, the user spreads a hand H toward the TV 1 (camera device 11) and makes a gesture of holding an open hand, a gesture graphic user interface (GUI) #1 is displayed on the display of the TV 1 in a state of being superimposed on the video P1, as illustrated on the right side of Fig. 1. The gesture GUI #1 is a GUI that presents, to the user, what kind of operation may be performed next by what kind of gesture. A gesture related to an operation of the TV 1 is presented by the gesture GUI #1.

The user is enabled to display the gesture GUI #1 by making the gesture of the open hand, which is a specific gesture. The gesture of the open hand serves as a gesture of a starting point for displaying the gesture GUI #1 and performing a device operation by the next gesture.

Hereinafter, the gesture of the starting point for displaying the gesture GUI #1 and performing the device operation by the next gesture will be referred to as a starting point gesture as appropriate.

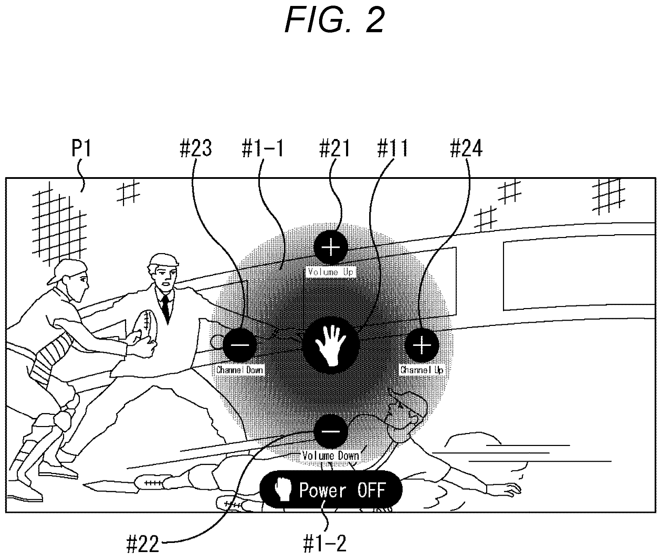

Fig. 2 is an enlarged view of the gesture GUI #1.

As illustrated in Fig. 2, the gesture GUI #1 includes a gesture menu #1-1 and a gesture menu #1-2. The gesture menu #1-1 largely displayed at substantially the center of the screen indicates information including a circular image or the like. The gesture menu #1-2 displayed below the gesture menu #1-1 indicates information including a small oval image or the like.

For example, the gesture menu #1-1 is displayed in a state where predetermined transparency is set. According to the transparency of each position, the video P1 appears through the gesture menu #1-1.

A hand icon #11, which is a circular icon indicating the starting point gesture, is displayed at the center of the gesture menu #1-1. As a hand image included in the hand icon #11, an image of a hand illustration may be used, or an image of the hand H captured by the camera device 11 may be used.

The gesture menu #1-1 has a configuration in which a volume up icon #21, a volume down icon #22, a channel down icon #23, and a channel up icon #24 are arranged on the top, bottom, left, and right of the hand icon #11 as the center, respectively. The volume up icon #21 and the volume down icon #22 are linearly arranged at positions in opposite directions with the hand icon #11 as the center. The channel down icon #23 and the channel up icon #24 are linearly arranged at positions in opposite directions with the hand icon #11 as the center.

The volume up icon #21 to the channel up icon #24 are command icons indicating the content of the device operation (command). The volume up icon #21 is a command icon indicating an operation of volume up. The volume down icon #22 is a command icon indicating an operation of volume down. The channel down icon #23 is a command icon indicating an operation of channel down. The channel up icon #24 is a command icon indicating an operation of channel up. Characters indicating the content of the operation are displayed under each of the command icons.

The gesture menu #1-1 indicates in which directions the hand should be moved to perform the operations indicated by the respective command icons by the arrangement positions of the command icons.

The gesture menu #1-2 includes a hand icon indicating a gesture of a fist and characters of Power OFF. The gesture menu #1-2 indicates that the power of the TV 1 can be turned off by the fist gesture performed.

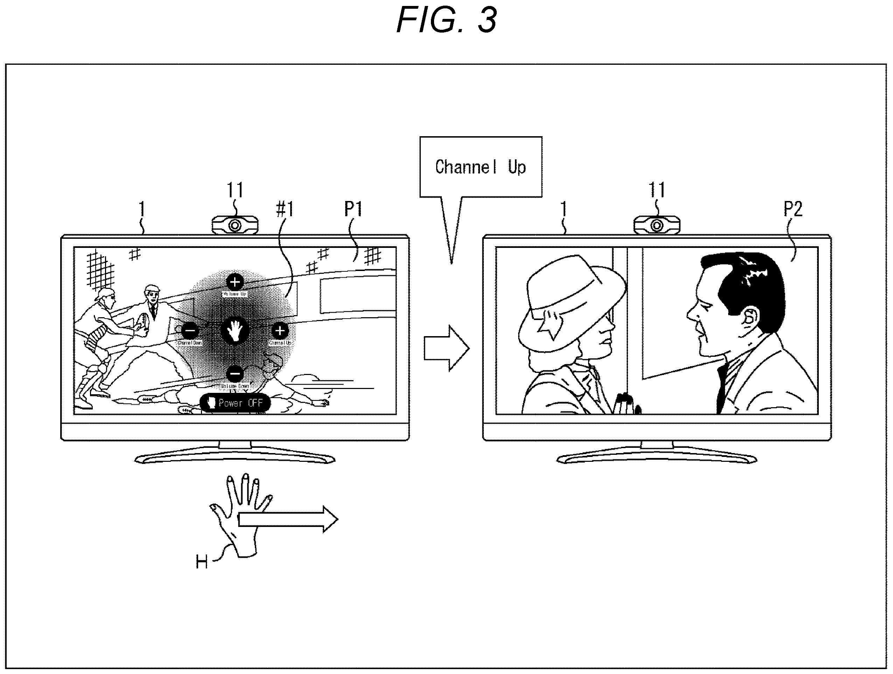

Fig. 3 is a diagram illustrating an exemplary gesture-based operation.

In a case where the user makes a gesture of moving the hand H rightward following the starting point gesture in the state where the gesture GUI #1 having the configuration as described above is displayed, the TV 1 accepts the channel up operation as illustrated on the right side of Fig. 3. On the display of the TV 1, video P2, which is video of content broadcasted on the channel after the channel up, is displayed instead of the video P1.

In the gesture menu #1-1, the command icon arranged on the right side of the hand icon #11 is the channel up icon #24. The TV 1 identifies that the command icon arranged on the right side of the hand icon #11 is the channel up icon #24 according to the fact that the gesture of moving the hand H rightward is made following the starting point gesture. Furthermore, a control command corresponding to the channel up operation is executed to perform channel up. Control commands for performing processing corresponding to the operations indicated by the individual command icons are associated with the individual command icons.

While the display of the gesture GUI #1 disappears after the channel up in the example of Fig. 3, it may be displayed for a certain period after the channel up.

As described above, in the information processing system, a device, such as the TV 1, is operated by the two-step gesture using the first-stage gesture (first gesture) such as the open hand serving as the starting point gesture and the second-stage gesture (second gesture) following the starting point gesture. As will be described later, it is also possible to operate a device other than the TV 1 by the two-step gesture.

A type of the operation using the two-step gesture is switched according to the state of the TV 1 to be controlled. For example, operation types that may be selected using the two-step gesture are switched according the application running in the TV 1.

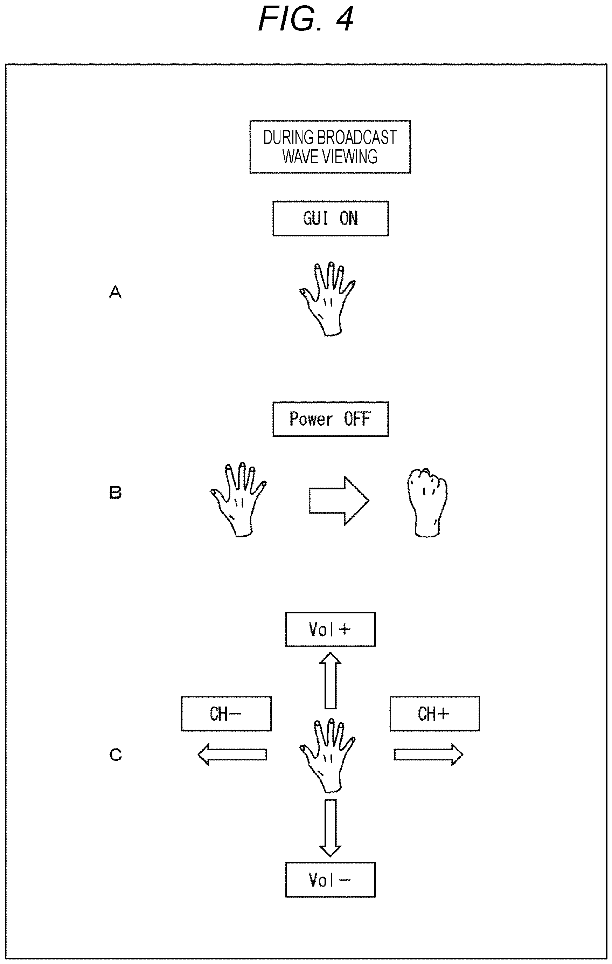

Fig. 4 is a diagram illustrating an example of the two-step gesture during broadcast wave viewing.

An operation during the broadcast wave viewing (during broadcast content viewing) is the same as the operation described above. That is, as illustrated in A of Fig. 4, the gesture GUI #1 is displayed by the open hand gesture serving as the starting point gesture.

Furthermore, as illustrated in B of Fig. 4, the hand is clenched following the starting point gesture to make the fist gesture, whereby the power-off operation is accepted. The power-off operation is accepted according to the fist gesture in which a manner of moving fingers is different from that of the open hand gesture serving as the starting point gesture.

As illustrated in C of Fig. 4, the hand is moved upward, downward, leftward, and rightward following the starting point gesture, whereby the volume up operation, the volume down operation, the channel down operation, and the channel up operation are accepted, respectively.

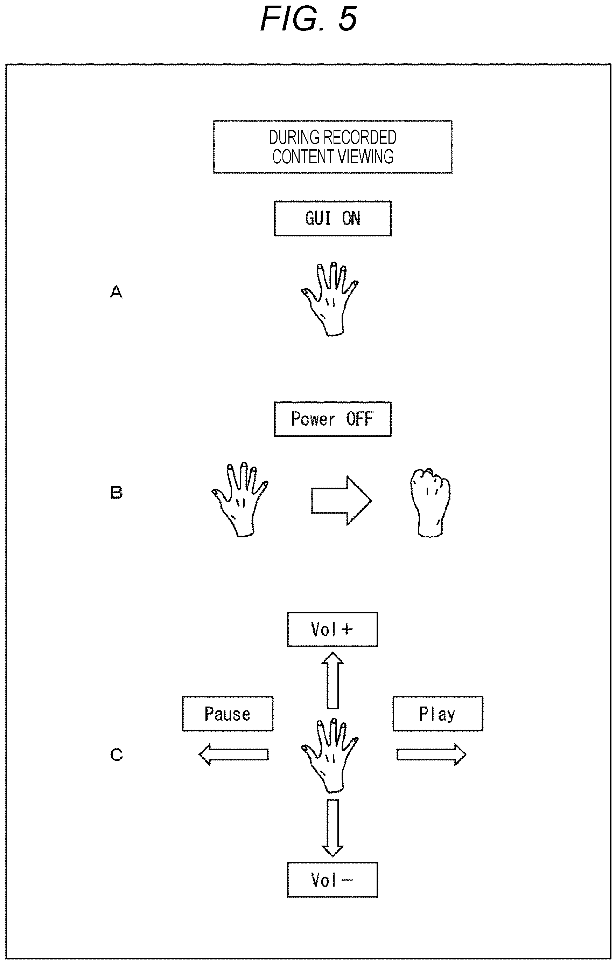

Fig. 5 is a diagram illustrating an example of the two-step gesture during recorded content viewing.

As illustrated in A of Fig. 5, the gesture GUI #1 is displayed by the open hand gesture serving as the starting point gesture, in a similar manner to A of Fig. 4.

Furthermore, as illustrated in B of Fig. 5, the hand is clenched following the starting point gesture to make the fist gesture, whereby the power-off operation is accepted in a similar manner to B of Fig. 4.

As illustrated in C of Fig. 5, the hand is moved upward, downward, leftward, and rightward following the starting point gesture, whereby a volume up operation, a volume down operation, a pause operation, and a play operation are accepted, respectively.

For example, in a case where a gesture not included in the gestures presented by the gesture GUI #1 (gesture different from the gestures presented by the gesture GUI #1) is made, the display of the gesture GUI #1 ends.

In this manner, various operations according to the state of the TV 1 are performed using the two-step gesture starting from the starting point gesture, which is one specific gesture.

Since the gesture GUI #1 presents which gesture is to be made to perform which operation, the user is enabled to check the next gesture only by performing the starting point gesture. That is, the user is not required to memorize which gesture is to be made to perform which operation, and is enabled to easily operate the device such as the TV 1.

A series of processes of the TV 1 in response to the user operation based on the two-step gesture will be described later.

### <Configuration of information processing system>

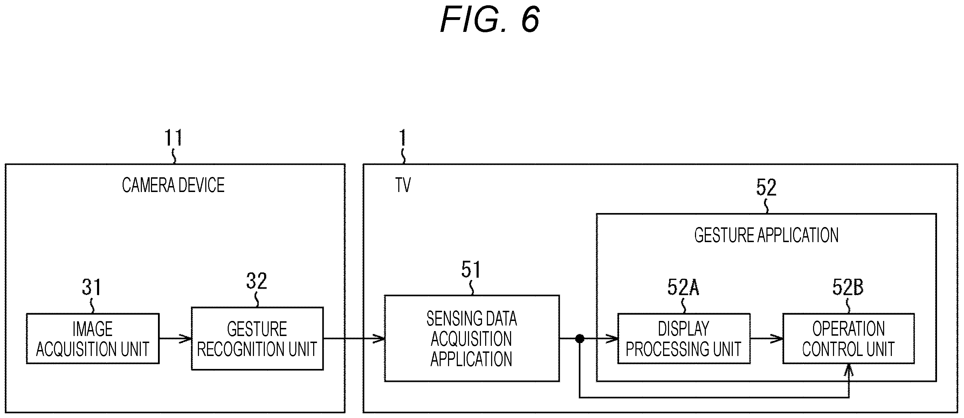

Fig. 6 is a block diagram illustrating a configuration example of the information processing system.

The camera device 11 includes an image acquisition unit 31 and a gesture recognition unit 32.

The image acquisition unit 31 includes an image sensor and the like. The image acquisition unit 31 images a state in front of the TV 1. In a case where the user is in front of the TV 1, an image reflecting the user is obtained. The camera device 11 including the image acquisition unit 31 functions as a detection unit that detects an action of the user.

The image captured by the image acquisition unit 31 is output to the gesture recognition unit 32. Another sensor, such as a time-of-flight (ToF) sensor, may be provided in the camera device 11 instead of the image sensor or together with the image sensor.

The gesture recognition unit 32 recognizes the gesture of the user on the basis of the image supplied from the image acquisition unit 31. The gesture recognition may be carried out on the basis of image analysis, or may be carried out using an inference model generated by machine learning. In the latter case, an inference model having an image reflecting a person as an input and a gesture recognition result as an output is prepared in the gesture recognition unit 32.

Information indicating the recognition result of the gesture recognition unit 32 is transmitted to the TV 1. The information to be transmitted to the TV 1 includes information indicating a type of the gesture made by the user. Note that the gesture recognition unit 32 may be provided in the TV 1, and in that case, the camera device 11 transmits the image captured by the image acquisition unit 31 to the TV 1.

The TV 1 includes a sensing data acquisition application 51 and a gesture application 52. The sensing data acquisition application 51 and the gesture application 52 are executed by the CPU of the TV 1, thereby implementing individual functional units.

The sensing data acquisition application 51 obtains the information indicating the gesture recognition result transmitted from the camera device 11 as sensor data. The information obtained by the sensing data acquisition application 51 is output to the gesture application 52.

The gesture application 52 is executed, thereby implementing a display processing unit 52A and an operation control unit 52B.

The display processing unit 52A controls the display of the gesture GUI on the basis of the information supplied from the sensing data acquisition application 51. As described above, the display processing unit 52A displays the gesture GUI in response to the starting point gesture being performed. Information regarding the configuration of the gesture GUI being displayed and the like is supplied from the display processing unit 52A to the operation control unit 52B.

The operation control unit 52B identifies the operation selected by the second-stage gesture on the basis of the information supplied from the sensing data acquisition application 51. The operation control unit 52B controls the operation of each unit of the TV 1 by executing the control command corresponding the operation selected by the second-stage gesture. Operations such as volume adjustment and channel switching described above are performed under the control of the operation control unit 52B. The operation control unit 52B functions as a control unit that controls the operation of each unit of the TV 1.

### <Operation of information processing system>

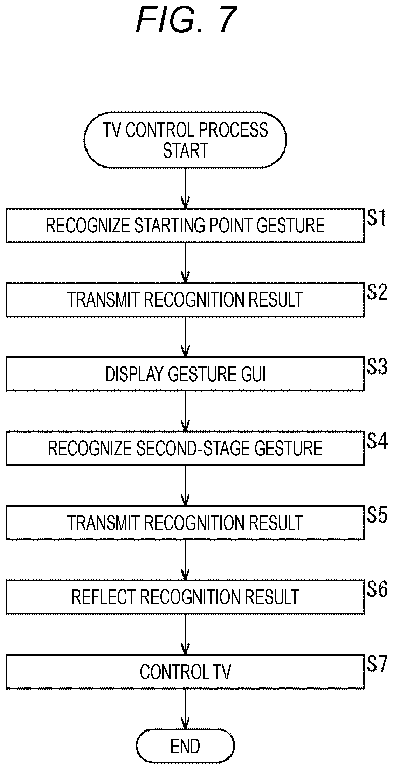

Here, a control process of the TV 1 will be described with reference to a flowchart of Fig. 7.

In step S1, the gesture recognition unit 32 of the camera device 11 recognizes the starting point gesture in response to a specific gesture made by the user. For example, while the content is being viewed, images reflecting the user are continuously supplied from the image acquisition unit 31 to the gesture recognition unit 32.

In step S2, the gesture recognition unit 32 transmits a recognition result to the TV 1.

In step S3, the display processing unit 52A of the TV 1 causes the display to display the gesture GUI #1 in response to the starting point gesture being performed.

In step S4, the gesture recognition unit 32 of the camera device 11 recognizes the second-stage gesture performed following the starting point gesture.

In step S5, the gesture recognition unit 32 transmits a recognition result to the TV 1.

In step S6, the display processing unit 52A of the TV 1 reflects the recognition result of the second-stage gesture on the display of the gesture GUI #1. The display of the gesture GUI #1 is appropriately switched according to the second-stage gesture, as will be described later.

In step S7, the operation control unit 52B identifies the operation on the gesture GUI #1 selected by the user on the basis of the second-stage gesture. The operation control unit 52B executes the control command corresponding to the identified operation to control the TV 1.

According to the process above, the user is enabled to easily operate the TV 1 using the two-step gesture.

While the gesture serving as the starting point gesture has been assumed to be the open hand gesture in the description above, another gesture using a hand, such as a fist gesture or a gesture of raising one finger, may be set as the starting point gesture. A gesture using not only one hand but also both hands may be set as the starting point gesture.

Instead of the hand, a gesture using another part, such as a gesture using an arm or a gesture using a head, may be set as the starting point gesture.

A gesture using not only one part but also a plurality of parts may be set as the starting point gesture. For example, a gesture obtained by combining an open hand gesture using a hand and a gesture of turning a face toward the TV 1 may be set as the starting point gesture. With this arrangement, it becomes possible to suppress erroneous recognition of the starting point gesture in a case where a person who does not face the TV 1 accidentally performs the open hand operation.

### <First display example of gesture GUI #1 (Display of hand icon)>

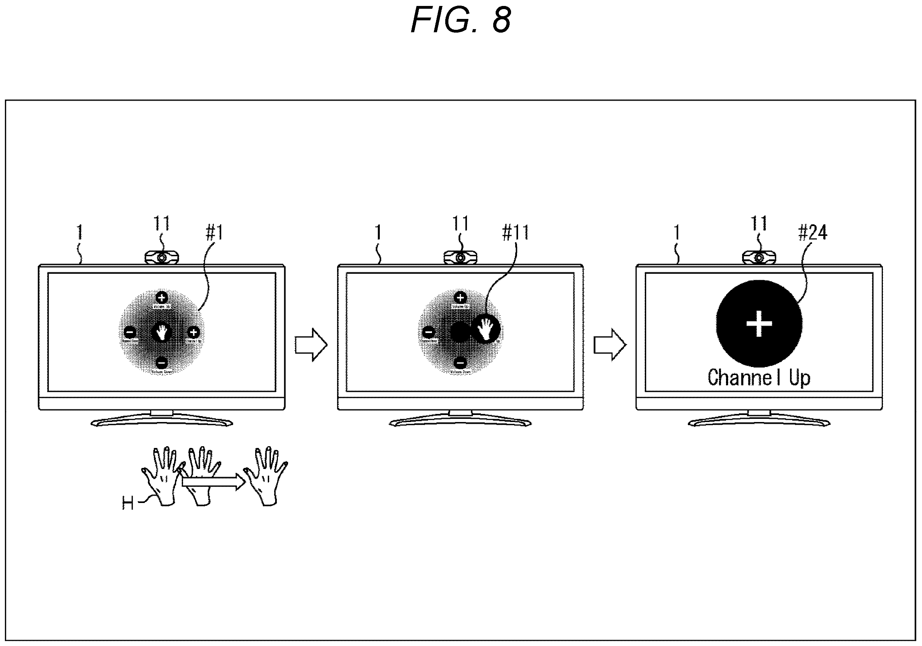

Fig. 8 is a diagram illustrating exemplary display of the gesture GUI #1.

The state illustrated on the left side of Fig. 8 indicates a state where the user makes the starting point gesture and the gesture GUI #1 is displayed on the display of the TV 1. In Fig. 8, illustration of the gesture menu #1-2 is omitted. Subsequent drawings illustrating the display of the gesture GUI #1 are illustrated in a similar manner.

In a case where, in such a state, the user makes a gesture of moving the hand H rightward as the second-stage gesture, the hand icon #11 moves rightward as illustrated at the center of Fig. 8. The hand icon #11 moves in the same direction as the second-stage gesture and is displayed following the movement of the second-stage gesture performed following the starting point gesture.

When the hand icon #11 moves to the position of the channel up icon #24, the selected channel up icon #24 is enlarged and displayed as illustrated on the right side of Fig. 8. Thereafter, the processing corresponding to the channel up operation is executed.

The enlarged display of the selected command icon allows the user to check how his/her gesture is recognized.

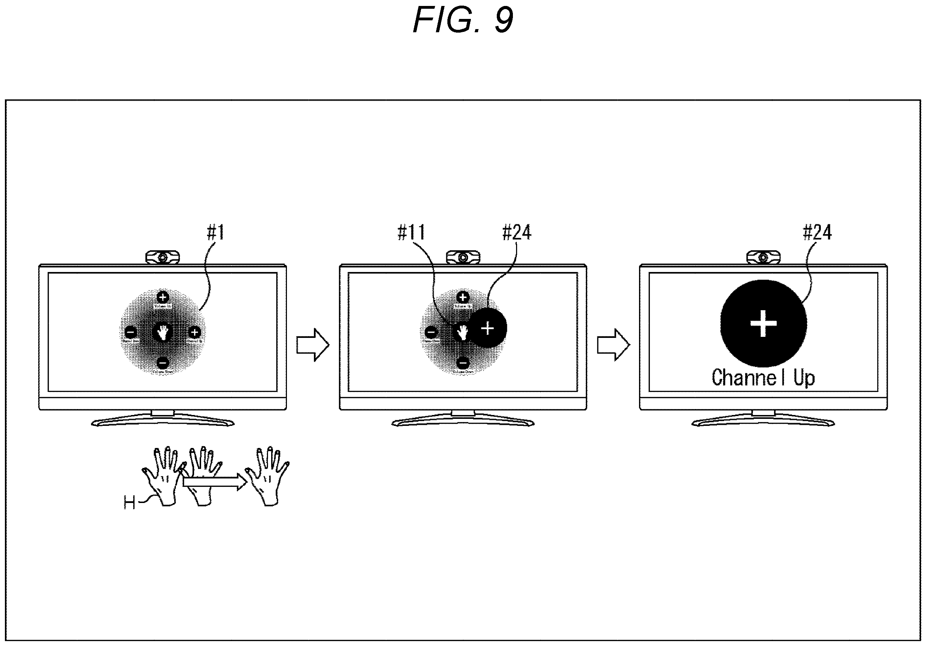

Fig. 9 is a diagram illustrating another exemplary display of the gesture GUI #1.

In the gesture GUI #1 illustrated in Fig. 9, the selected command icon is enlarged and displayed without the hand icon #11 being moved.

The state illustrated on the left side of Fig. 9 is the same as the state illustrated on the left side of Fig. 8. The gesture GUI #1 is displayed on the display of the TV 1 by the starting point gesture performed by the user.

In a case where, in such a state, the user makes a gesture of moving the hand H rightward as the second-stage gesture, the selected channel up icon #24 is gradually enlarged and displayed as illustrated at the center of Fig. 9.

When the selection is confirmed, as illustrated on the right side of Fig. 9, the channel up icon #24 is largely displayed, and then the processing corresponding to the channel up operation is executed.

As a method for emphasized display of the selected command icon, a method other than the enlarged display may be used. For example, a method such as movement to the display center, bordering of the outer periphery of the command icon, or color change of the command icon may be used as the method for emphasized display.

### <Second display example of gesture GUI #1 (Presentation of track of hand movement)>

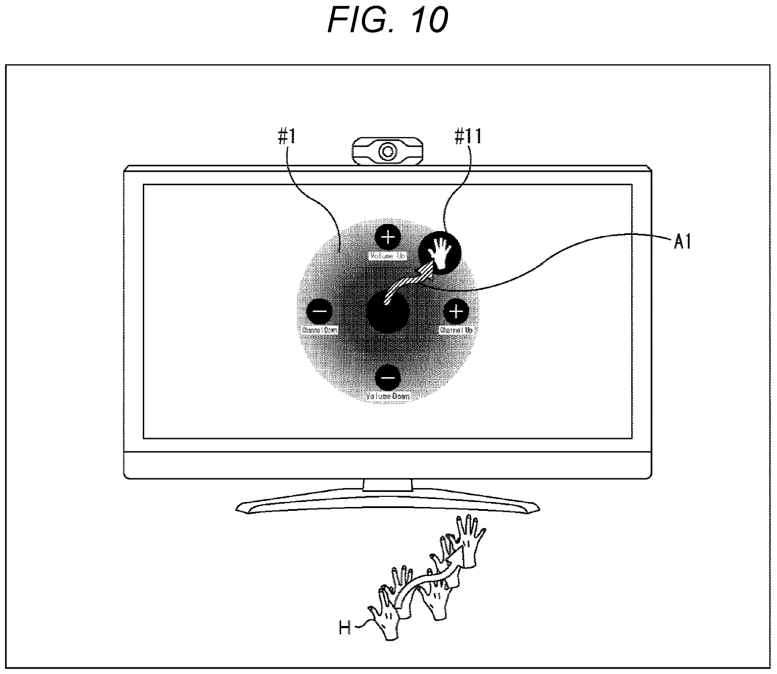

Fig. 10 is a diagram illustrating exemplary presentation of a track of hand movement.

In a case where the user makes a gesture of moving the hand H in an upper right direction as indicated by an open arrow in Fig. 10 in a state where the gesture GUI #1 is displayed, the hand icon #11 moves following the movement of the hand H, and an arrow image A1 indicating a track of the movement of the hand H is displayed. The hand icon #11 may not move from the center of the gesture GUI #1, and only the arrow image A1 indicating the track of the movement of the hand H may be displayed.

Toward which command icon the hand H of the user is moving may be presented instead of presenting the track of the actual movement of the hand H of the user.

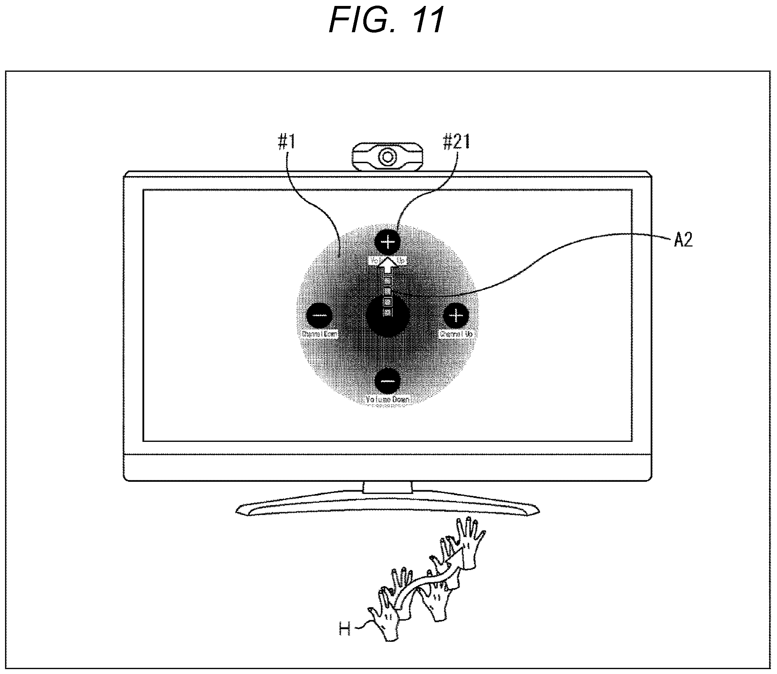

Fig. 11 is a diagram illustrating exemplary presentation of a hand movement direction.

In a case where the user makes a gesture of moving the hand H in an upper right direction as indicated by an open arrow in Fig. 11 in the state where the gesture GUI #1 is displayed, an arrow image A2 indicating a recognition result of toward which command icon the hand H is moving. In the example of Fig. 11, the arrow image indicating the direction toward the volume up icon #21 in the upward direction is displayed as the arrow image A2. Both the arrow image A1 indicating the track of the movement of the hand H and the arrow image A2 indicating the direction of the movement of the hand H may be displayed.

Furthermore, the gesture of the user may be recognized as a second-stage gesture, and information indicating how much more movement is required to move to a position or time at which selection of the command icon is determined may be displayed. In Fig. 11, the movement amount or the movement time until the selection of the command icon is determined is expressed by the color of the edge of the arrow image A2. By the hand H moving until the all edge colors of the arrow image A2 change, the selection of the command icon is determined to execute the control command.

### <Third display example of gesture GUI #1 (Display of boundary of recognition region)>

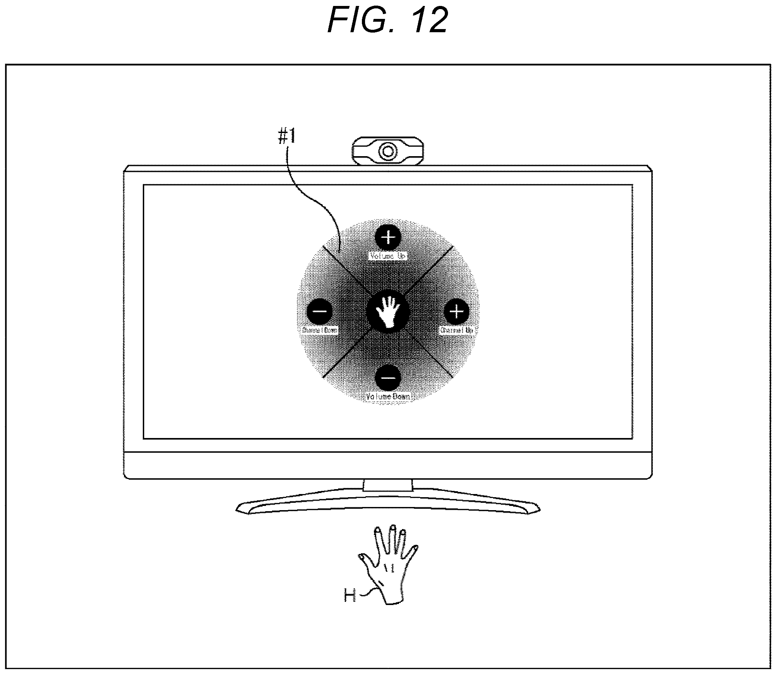

Fig. 12 is a diagram illustrating exemplary display of a boundary of a recognition region.

As illustrated in Fig. 12, boundaries of regions assigned to individual operations may be displayed on the GUI #1.

In this case, not only a gesture of moving the hand H toward a command icon but also a gesture of moving the hand H in a direction of a region assigned to an operation is recognized as a second-stage gesture. The regions assigned to the individual operations serve as the recognition regions of the second-stage gestures for selecting the individual operations. The boundaries of the recognition regions may be internally set without being displayed on the GUI #1.

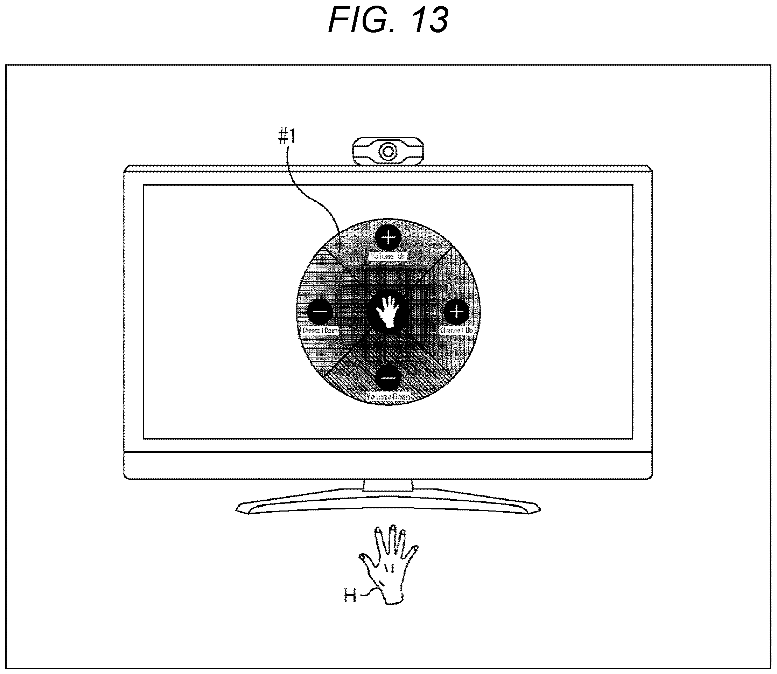

Fig. 13 is a diagram illustrating another exemplary display of the boundary of the recognition region.

As illustrated in Fig. 13, the recognition regions of the individual operations (recognition regions of the second-stage gestures for selecting the individual operations) may be displayed in different colors. In Fig. 13, the recognition regions of the individual operations are hatched differently to indicate that they are displayed in different colors. Each of the recognition regions may be displayed using a translucent color, or may be displayed using an opaque color.

A non-recognition region may be prepared. The non-recognition region is a region where no operation selection is accepted even if a second-stage gesture is made. Functions of individual regions may be expressed in gradations such that, for example, the non-recognition region is displayed in dark black and the recognition region is displayed in light black.

In a case where the hand icon #11 moves as described above, operation selection is not accepted even if the hand icon #11 moves in the non-recognition region. When the hand icon #11 moves into the recognition region displayed in light black, the operation selection is accepted.

### <Fourth display example of gesture GUI #1 (Continuous action)>

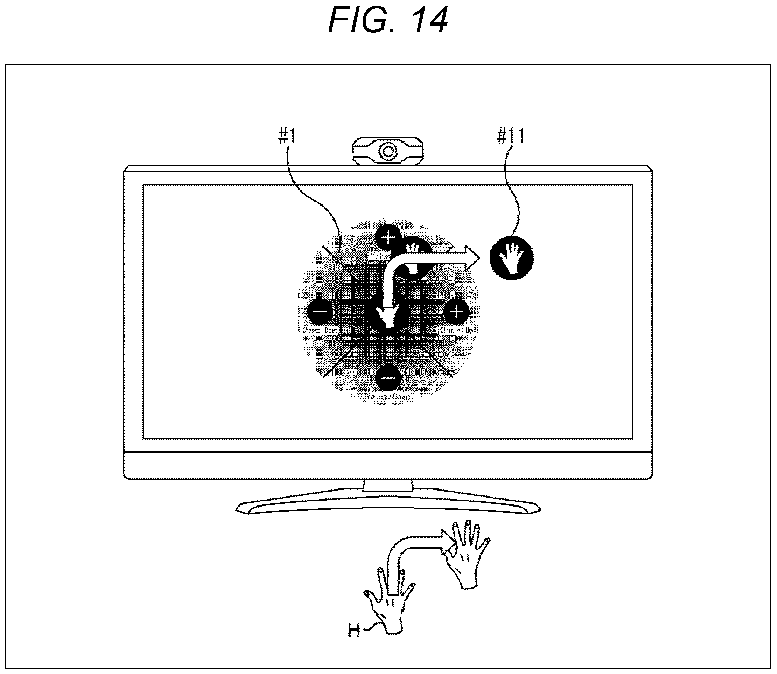

Fig. 14 is a diagram illustrating an exemplary gesture across a plurality of recognition regions.

In the example of Fig. 14, the hand icon #11 is moved and displayed following the movement of the hand of the user. The hand icon #11 may not move. As indicated by an open arrow in Fig. 14, in a case where the user moves the hand H upward and moves it rightward in the recognition region of the volume up operation to make a gesture toward the recognition region of the channel up operation, the channel up operation ultimately selected is accepted. In a case where a gesture of moving the hand icon #11 across a plurality of recognition regions is made, the operation of the ultimately selected recognition region is accepted. The recognition regions may extend to a region outside the gesture GUI #1.

A time until the operation selection is accepted may be set. For example, a time from the start of the movement of the hand H, a time during which the hand H remains in the recognition region, and the like are measured, and the operation selection is accepted when the measured time has passed a predetermined time.

Furthermore, in a case where a state where the hand icon #11 is placed in the recognition region of a certain operation continues, the control command corresponding to the operation may be repeatedly executed. For example, in a case where the state where the hand icon #11 is moved to the recognition region where the channel up icon #24 is displayed continues, the control command corresponding to the channel up operation is executed a plurality of times to repeat channel up.

In a case where the second-stage gesture is made while the open hand state same as the starting point gesture is maintained, the display of the gesture GUI #1 may disappear when the open hand state is released. Control according to the state of the TV 1 may be performed such that, instead of disappearance of the display of the gesture GUI #1, the volume of the TV 1 is muted when the fist gesture is made, for example.

### <Fifth display example of gesture GUI #1 (Display position control)>

The gesture GUI #1 may be displayed at a position other than the center of the display of the TV 1. For example, the gesture GUI #1 may be displayed at a position on the display corresponding to the position at which the hand H is held or a position corresponding to a position of an object reflected in the video.

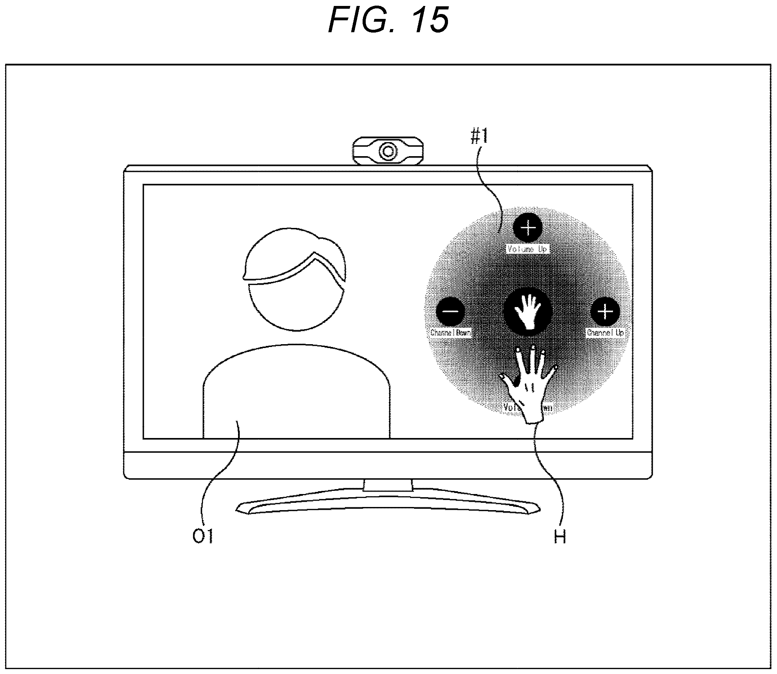

Fig. 15 is a diagram illustrating an exemplary display position of the gesture GUI #1.

In the example of Fig. 15, in response to the starting point gesture made by the user holding the hand H over the right side of the display, the gesture GUI #1 is displayed at a position out of a person reflected as an object O1.

With this arrangement, the user is enabled to change the display position of the gesture GUI #1 depending on the content of the video displayed on the TV 1.

The gesture GUI #1 having a different size may be displayed according to a distance to the user or a distance to the hand H used by the user to make the starting point gesture. In this case, for example, the camera device 11 is equipped with a function of measuring a distance to an object on the basis of an image obtained by imaging.

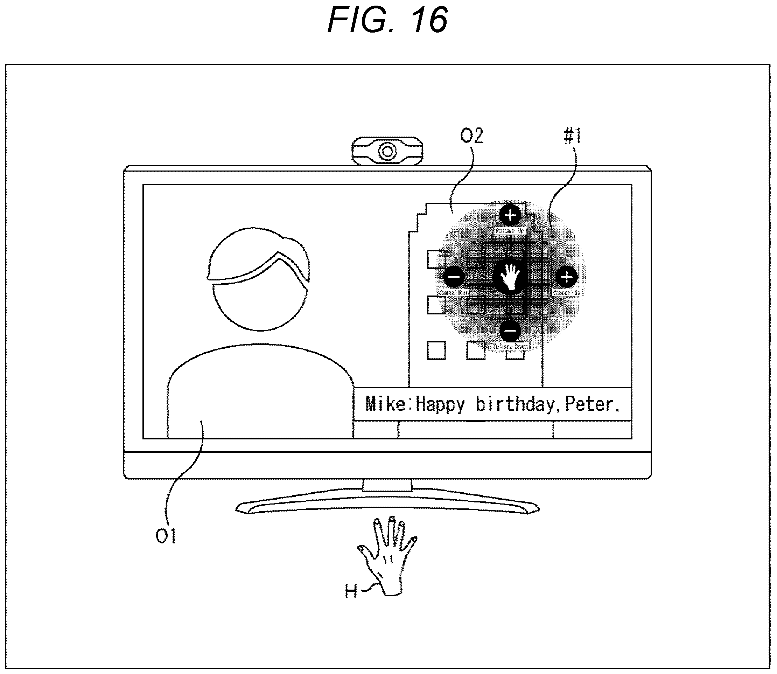

Fig. 16 is a diagram illustrating another exemplary display position of the gesture GUI #1.

In the example of Fig. 16, video is displayed in which a person as the object O1 appears on the left side and a building as an object O2 appears on the right side. Subtitles are displayed at the lower right of the video.

In this case, as illustrated in Fig. 16, the gesture GUI #1 is displayed not to overlap with at least a part of the display of the object O1 and the subtitles, which are important objects. For example, an importance level is set to each object. The display position of the gesture GUI #1 is determined not to overlap with an object with a higher importance level on the basis of the importance level set to each object.

The color of the gesture GUI #1 may change to correspond to the color of the background on which the gesture GUI #1 is superimposed and displayed. At that time, a color in consideration of accessibility may be used.

The user may be enabled to set the display position and size of the gesture GUI #1 to conform to the size of the object.

### <Sixth display example of gesture GUI #1 (Display size control)>

The size of the gesture GUI #1 may be changed according to the distance to the user or the distance to the hand H used by the user to make the starting point gesture.

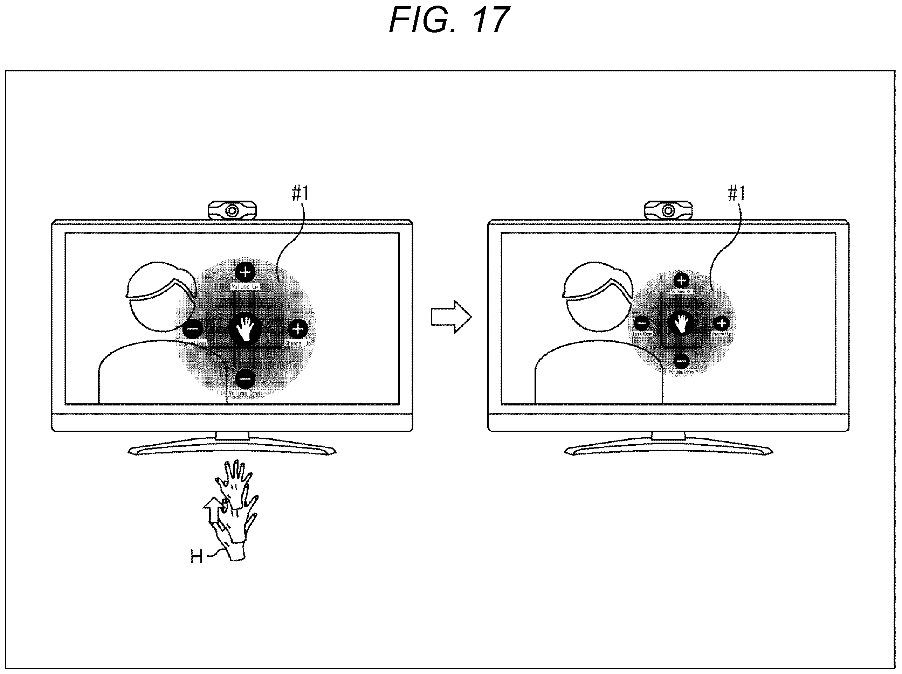

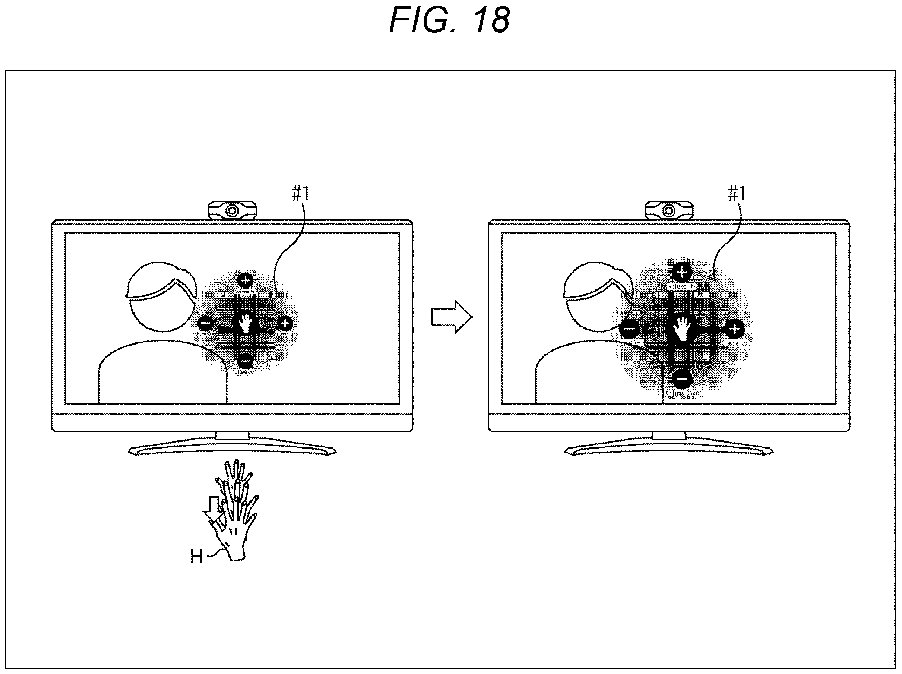

Figs. 17 and 18 are diagrams illustrating exemplary changes in the display size of the gesture GUI #1.

As illustrated in Fig. 17, the gesture GUI #1 is scaled down and displayed as the hand H approaches the TV 1. On the other hand, as illustrated in Fig. 18, the gesture GUI #1 is scaled up and displayed as the hand H moves away from the TV 1.

The gesture GUI #1 may be larger as the hand H approaches the TV 1, and the gesture GUI #1 may be smaller as the hand H moves away from the TV 1.

The command icon may be selected by the gesture of pushing the command icon with the hand H being performed, or by the gesture of grasping the command icon with the hand H being performed. Furthermore, the number and types of the command icons may change in response to movement of the hand H in the depth direction, such as movement of the hand H for approaching or being away from the TV 1.

### <Seventh display example of gesture GUI #1 (External device control)>

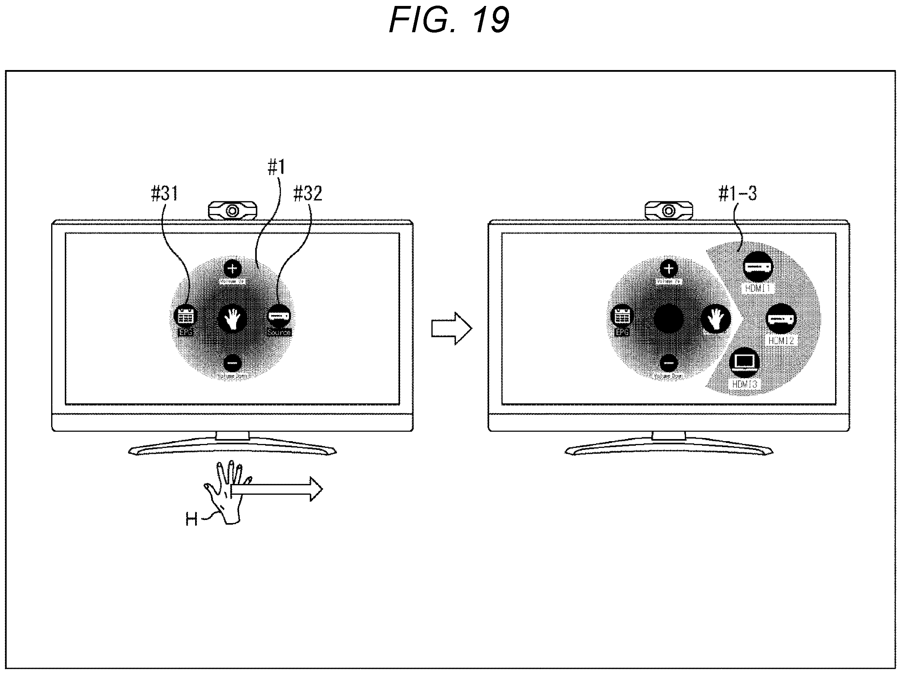

Fig. 19 is a diagram illustrating exemplary control of an external device.

In the example of Fig. 19, the gesture GUI #1 is displayed in which a command icon #31 is arranged on the left side and a command icon #32 is arranged on the right side. The command icon #31 is a command icon to be operated to display an electronic program guide (EPG). The command icon #32 is a command icon to be operated to display a menu related to an operation of the external device. An operation of the external device such as a hard disk recorder as a video source is performed using the gesture GUI #1.

In a case where the command icon #32 is selected by the gesture of moving the hand H rightward being performed in a state where the gesture GUI #1 having such a configuration is displayed, a gesture menu #1-3 is displayed outside the gesture GUI #1, as illustrated on the right side of Fig. 19.

The gesture menu #1-3 is information to be used to operate an external device coupled to the TV 1. In the example of Fig. 19, icons representing external devices connected to three inputs of a high definition multimedia interface (HDMI) (registered trademark) 1, an HDMI 2, and an HDMI 3 are displayed in the gesture menu #1-3. The user is enabled to switch the input of the TV 1 by selecting any of the command icons using a gesture.

The gesture menu #1-3 may be displayed to be superimposed on the gesture GUI #1 instead of outside the gesture GUI #1.

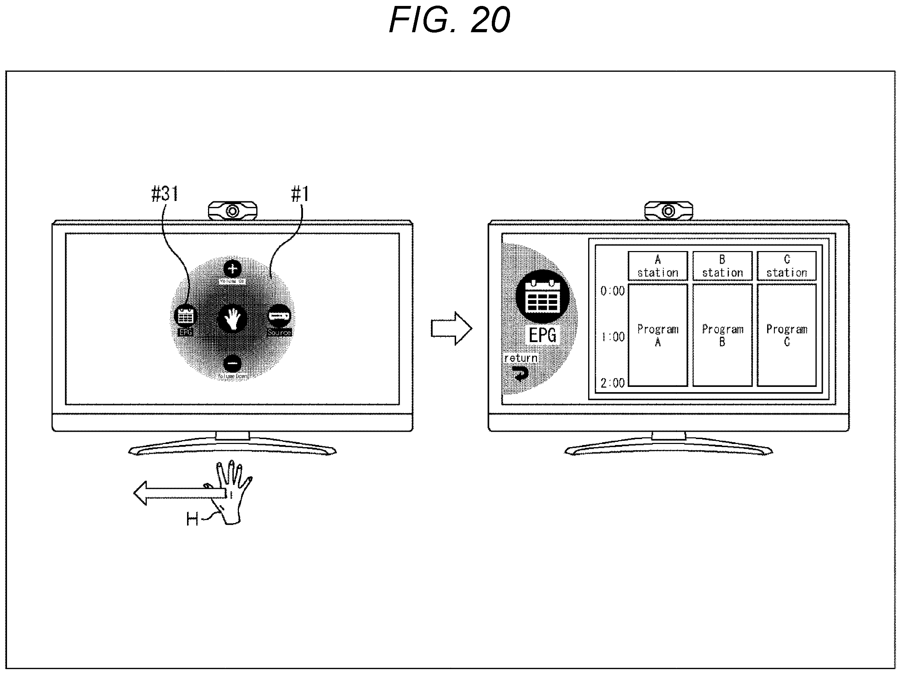

Meanwhile, in a case where the command icon #31 is selected by the gesture of moving the hand H leftward being performed in the state where the gesture GUI #1 in Fig. 19 is displayed, the display of the display is switched to the display illustrated on the right side of Fig. 20. In the example of Fig. 20, a program guide (EPG) is largely displayed instead of the gesture GUI #1.

Information such as a gesture menu or an EPG displayed when a certain command icon is selected may be displayed in the same direction as the arrangement direction of the command icon on the gesture GUI #1. A gesture menu in which a command icon indicating another operation such as return is arranged may be displayed.

### <Eighth display example of gesture GUI #1 (Control of gesture menu display position)>

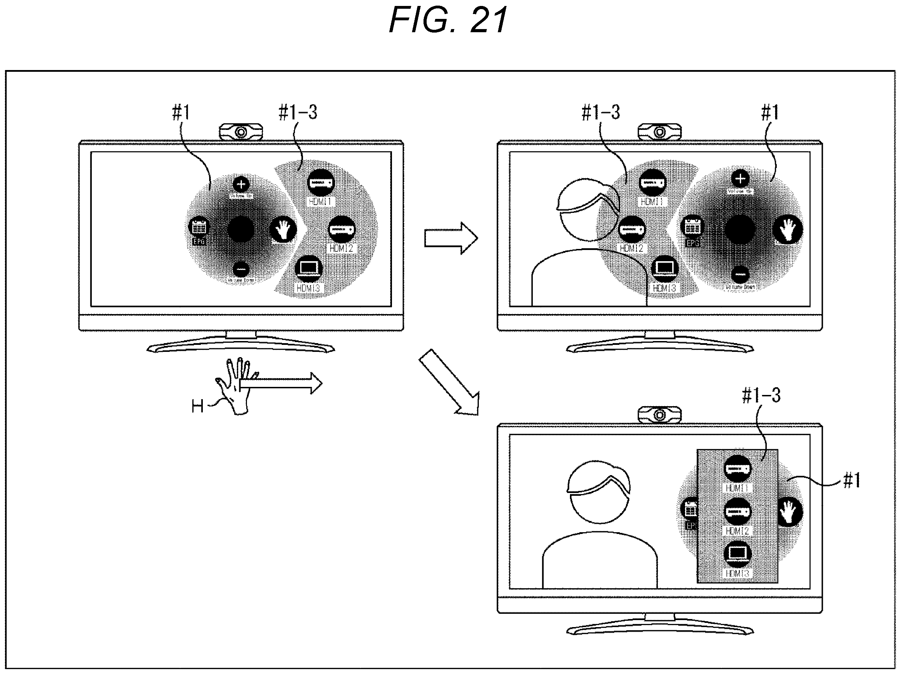

Fig. 21 is a diagram illustrating exemplary control of the display position of the gesture menu.

As illustrated on the left side of Fig. 21, display of the gesture menu #1-3 in a case where the user selects the command icon #32 arranged on the right side of the gesture GUI #1 will be described.

In a case where the gesture GUI #1 is displayed at the right end of the display and there is no space for displaying the gesture menu #1-3 on the right side of the gesture GUI #1, the gesture menu #1-3 is displayed in the direction toward the left where there is a display space, as illustrated at the upper right of Fig. 21.

As illustrated at the lower right of Fig. 21, the gesture menu #3-1 may be displayed to be superimposed on the gesture GUI #1. The display of the gesture GUI #1 may disappear, and only the gesture menu #1-3 may be displayed.

### <Ninth display example of gesture GUI #1 (Video preview display)>

Video output from an external device may be previewed on the gesture GUI #1 when the command icon indicating the external device is selected.

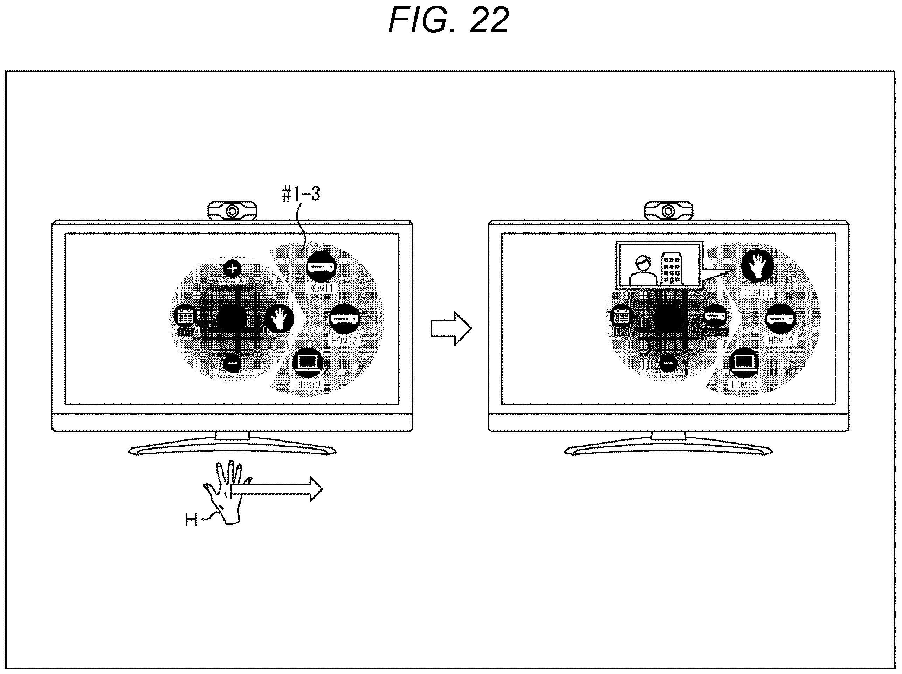

Fig. 22 is a diagram illustrating exemplary video preview display.

In a case where the command icon indicating the external device connected to the HDMI 1 is selected in the state where the gesture menu #1-3 is displayed, a preview image of the video output from the external device is displayed as illustrated on the right side of Fig. 22. The image illustrated in the balloon indicates the preview image of the video output from the external device connected to the HDMI 1.

Furthermore, instead of the video preview display, one or more operations that may be performed by the external device corresponding to the command icon or operations that may be instructed by the TV 1 to the external device corresponding to the command icon may be displayed. The TV 1 may transmit the selected command to the external device by a consumer electronics control (CEC) function of the HDMI.

On the EPG, a preview of video of a program being broadcasted or an operation to be performed on the program being broadcasted may be displayed.

### <Tenth display example of gesture GUI #1 (Display of gesture being recognized)>

The gesture being recognized may be presented to the user.

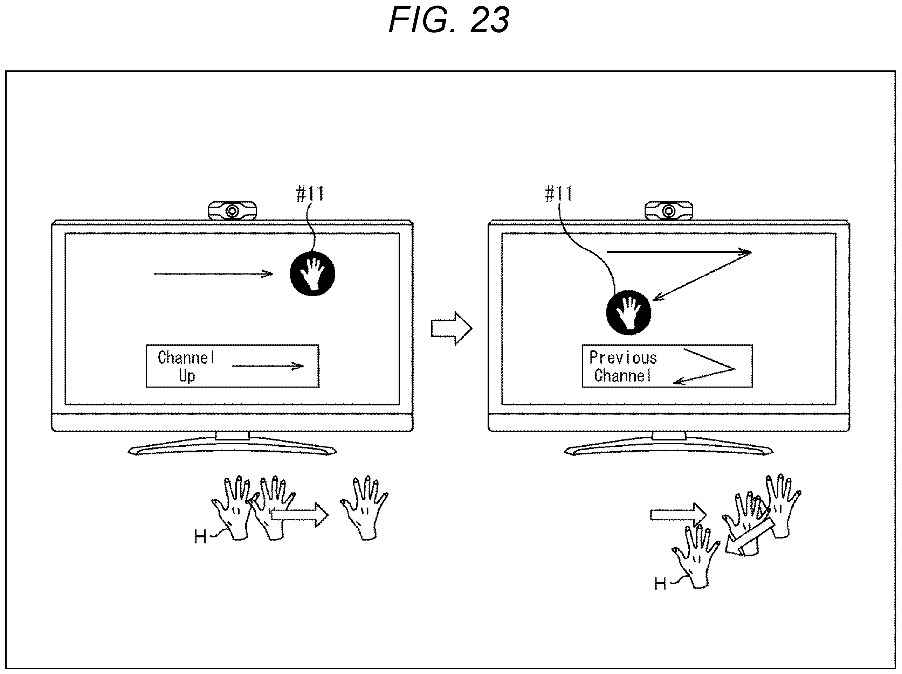

Fig. 23 is a diagram illustrating exemplary presentation of a gesture being recognized.

As illustrated on the left side of Fig. 23, in a case where a gesture of moving the hand H rightward is made, the hand icon #11 moves rightward following the movement of the hand H, and a track of the movement of the hand H is displayed on the upper side of the screen.

Furthermore, information indicating which operation is being recognized is displayed on the lower side of the screen. In the example of Fig. 23, it is displayed that the gesture for selecting the channel up operation is being recognized in response to the movement of the hand H toward the right. In a case where the movement of the hand H stops in this state, the channel up operation is accepted.

The information indicating which operation is being recognized may be displayed in response to the open hand gesture that is the same as the starting point gesture. The information indicating the operation being recognized may be displayed in response to a fist gesture or the like different from the starting point gesture being performed, or may be displayed according to an operation of a remote controller.

In a case where a gesture of moving the hand H toward the lower left is made following the movement of the hand H toward the right as illustrated on the right side of Fig. 23, the display of the information presenting the gesture being recognized is switched to the display indicating that the gesture for selecting the previous channel operation is being recognized. Note that, in a case where there is no operation corresponding to the gesture being recognized, it is presented that an effective gesture similar to the gesture being recognized is being recognized.

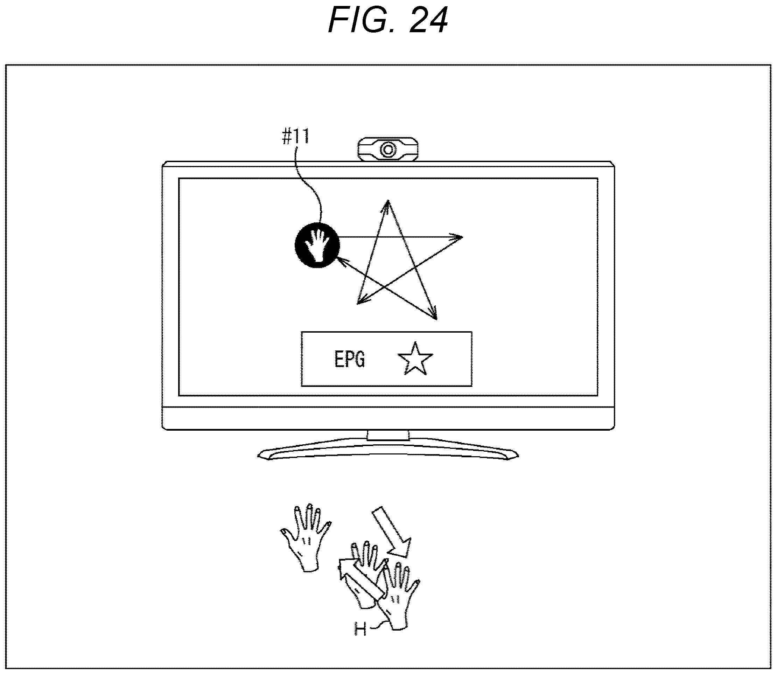

In a case where the user moves the hand H to make a gesture of drawing a shape of a star following the state on the right side of Fig. 23, the operation to be ultimately input is determined as illustrated in Fig. 24. In the example of Fig. 24, the operation of displaying the EPG is input. The operation to be ultimately input is determined by, for example, continuous recognition for a certain period of time or continuous recognition made until the hand movement amount falls below a certain threshold.

The operation to be ultimately input may be determined on the basis of a result of voice recognition. For example, utterance of a predetermined word such as "enter" or "OK" made by the user determines the operation being recognized at that time as the operation to be ultimately input. At this time, the predetermined word may be accepted without a hot word for activating the voice recognition being accepted.

### <Hardware configuration example of TV>

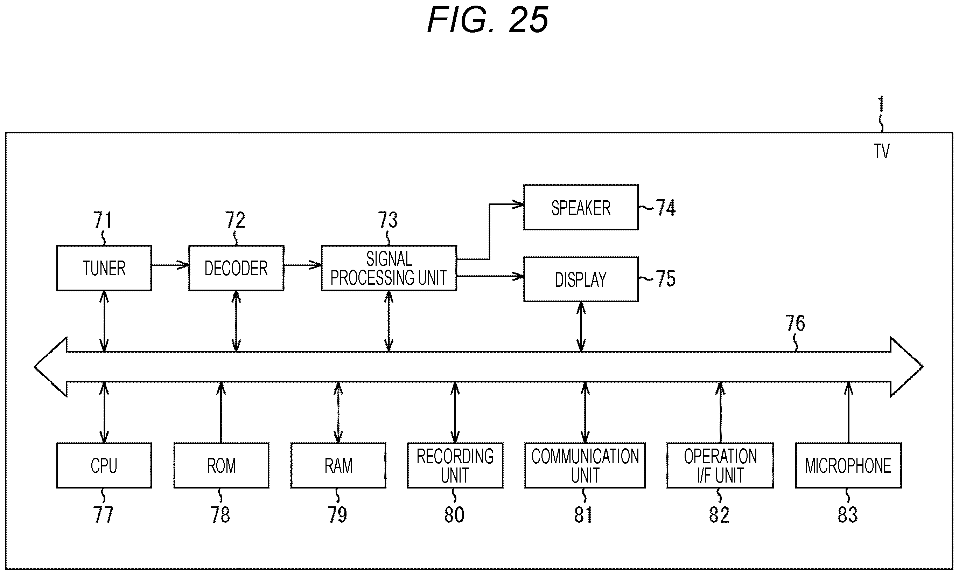

Fig. 25 is a block diagram illustrating a hardware configuration example of the TV 1.

Among components illustrated in Fig. 25, the components described above are denoted by the same reference numerals. Redundant description will be omitted as appropriate.

A tuner 71 receives broadcast wave signals supplied from an antenna (not illustrated) or broadcast wave signals supplied from a satellite broadcast or cable TV set-top box, and extracts signals of a channel selected by the user. The tuner 71 performs various kinds of processing such as analog/digital (A/D) conversion and demodulation on the extracted signals, and outputs program (content) data obtained by performing the various kinds of processing to a decoder 72.

The decoder 72 decodes a video stream included in the program data, and outputs data of each picture obtained by the decoding to a signal processing unit 73. Furthermore, the decoder 72 decodes an audio stream included in the program data, and outputs audio data of the program to the signal processing unit 73.

In a case of reproducing content of a predetermined distribution service, the decoder 72 decodes a video stream and an audio stream of the content received by a communication unit 81 and supplied via a bus 76. The decoder 72 outputs, to the signal processing unit 73, the data of each picture obtained by decoding the video stream of the content and the audio data obtained by decoding the audio stream.

The signal processing unit 73 carries out image quality adjustment of each picture supplied from the decoder 72 under the control of a CPU 77. The signal processing unit 73 outputs a picture after the image quality adjustment to a display 75, and performs control to display video of the program or the content.

Furthermore, the signal processing unit 73 performs digital/analog (D/A) conversion and the like on the audio data supplied from the decoder 72, and performs control to output sound of the program or the content from a speaker 74 in synchronization with the video.

The display 75 includes a liquid crystal display (LCD), an organic EL display, or the like.

The central processing unit (CPU) 77, a read only memory (ROM) 78, and a random access memory (RAM) 79 are mutually connected by a bus 76. The CPU 77 executes a program recorded in the ROM 78 or a recording unit 80 using the R_AM 79, and controls overall operation of the TV 1.

The recording unit 80 includes a recording medium such as a hard disk drive (HDD) or a solid state drive (SSD). The recording unit 80 records various kinds of data such as program data, content, EPG data, and programs.

The communication unit 81 is an interface for the Internet.

An operation interface (I/F) unit 82 receives information transmitted from the outside. Furthermore, the operation I/F unit 82 communicates with an external device by wireless communication using radio waves.

A microphone 83 detects voice of the user.

### <Variations>

While the information processing system has been described to include the TV 1 and the camera device 11, it may include the TV 1 equipped with the function of the camera device 11. In this case, the information processing system is implemented by the TV 1 alone.

The TV 1 equipped with the function of the camera device 11 is provided with the image acquisition unit 31 and the gesture recognition unit 32 described with reference to Fig. 6. The information processing system may include a plurality of housing devices, or may include one housing device.

Furthermore, at least one of gesture recognition, gesture-based operation identification, or device control may be performed by a server connected to the TV 1 via the Internet. The information processing system may be implemented by a server on the Internet, and the gesture recognition service may be provided by the server.

### - Operation input by sign language

An operation input using sign language may be accepted. In this case, for example, the camera device 11 is provided with a function of recognizing the sign language. During the sign language input, contents of the sign language being input are displayed on the screen as a character string. The user is enabled to continue the input while checking what is being input.

With this arrangement, even a user who is not able to speak aloud or a user having difficulty in utterance is enabled to operate the TV 1.

### - Operation input by track (shape) drawn by gesture

An operation input based on a track recognition result may be accepted in response to the user drawing a figure such as a circle, a triangle, a square, or a star, or a figure obtained by combining those figures with a gesture.

For example, a timer for one hour is set by a circular figure being drawn, and reproduction of recorded content is started by a square figure being drawn. Furthermore, video content is registered in a favorite list by a star figure being drawn.

With this arrangement, even a child is enabled to perform a gesture-based operation with a sense of play. For example, animation video of content distributed in a distribution service is displayed by a triangular figure being drawn.

There are limited types of gestures, and it is difficult for many people to convey information by a plurality of movements, such as the sign language. A frequently used operation may be registered as a special gesture.

### - Entertainment function using illustration drawn by gesture

An object having the same shape as a figure drawn by a gesture may be moved and played on the screen of the TV 1. By causing the TV 1 to display the object together with the state of the user captured by the camera device 11, it becomes possible to perform what is called an augmented reality (AR) operation in which the object input by the user using the gesture is touched by hand.

By enabling a pseudo AR experience, it becomes possible to use a TV having a large display as an entertainment device, for example.

### - Audio input of hot word using detection of face orientation

Utterance of a hot word is used to enable an operation input using voice. By enabling a hot word input when a face is oriented in a predetermined direction, it becomes possible to suppress erroneous detection even in a case where the hot word is short.

For example, in a case where a condition that the hot word is uttered in the state where the face is oriented toward the TV 1 is satisfied, the user is enabled to operate the TV 1 using voice. Operation inputs using voice are continuously accepted while the face of the user is oriented toward the TV 1. With this arrangement, if the face is kept oriented toward the TV 1 in a case of continuously operating the TV 1 or the like, individual operations may be continuously input without the hot word being uttered each time.

Furthermore, the gesture GUI may be displayed in response to utterance of a predetermined word, such as "gesture", when the face is oriented toward the TV 1.

In order to suppress erroneous detection, a long word is commonly used as a hot word for the operation using voice. By enabling the operation input using a shorter hot word, it becomes possible to operate the TV 1 more easily.

### - Gesture input optimized using facial recognition

An individual may be identified by facial recognition, and an operation specified by the user in advance may be assigned to a gesture. For example, a type of the gesture-based operation is associated with the user using a result of the facial recognition, an account, or the like in a server on the cloud. The gesture associated with the user may also be used in a terminal other than the TV 1.

Even an elderly person or a weak-sighted user is enabled to use a zoom function or a read-aloud function using the gesture associated with the user him/herself without using a remote controller. The zoom function may be made available by a gesture indicating a magnifying glass being made.

An expected value of the gesture and an operation type vary depending on the user. Furthermore, an elderly person or a weak-sighted user often experiences inconvenience, such as having difficulty in reading characters on the TV or having difficulty in finding the location of the remote controller.

By using the facial recognition or the like, it becomes possible to make the TV 1 more user-friendly even for an elderly person or a weak-sighted user. By making it possible to use a gesture according to personal preference, it becomes possible to operate, even in a case where a plurality of people uses the TV 1, the same TV 1 using individually different gestures.

### <Others>

Gestures not intended to make an input, such as gestures made at a time of talking with a neighbor, may be learned by machine learning. With this arrangement, it becomes possible to suppress erroneous detection of the starting point gesture.

When a specific gesture continues for a predetermined time, the gesture may be recognized as the starting point gesture. With this arrangement as well, it becomes possible to suppress erroneous detection of the starting point gesture.

In response to a specific gesture performed by the user, information indicating the remaining time regarding how many seconds the gesture is to be kept to be recognized as the starting point gesture may be displayed on the screen.

In order to suppress erroneous detection of the starting point gesture, only a gesture made by a person whose face is oriented toward the TV 1 may be input. Furthermore, only a gesture made when a forearm is oriented upward and a gesture made using a hand at a position closer to a face may be input.

### - Program

The series of processes described above may be executed by hardware, or may be executed by software. In a case where the series of processes is executed by software, a program included in the software is installed from a program recording medium to a computer incorporated in dedicated hardware, a general-purpose personal computer, or the like.

The program to be executed by the computer may be a program in which processing is performed in time series in the order described in the present specification, or may be a program in which processing is performed in parallel or at necessary timing, such as when a call is made.

In the present specification, a system is intended to mean a set of a plurality of components (devices, modules (parts), etc.), and it does not matter whether or not all the components are in the same housing. Therefore, a plurality of devices housed in different housings and connected via a network, and one device in which a plurality of modules is housed in one housing are both systems.

Note that the effects described in the present specification are merely examples and are not limited, and other effects may be exerted.

An embodiment of the present technology is not limited to the embodiment described above, and various modifications may be made without departing from the gist of the present technology.

For example, the present technology may employ a configuration of cloud computing in which one function is shared and processed in cooperation by a plurality of devices via a network.

Furthermore, each step explained in the flowchart described above may be executed by one device, or may be executed in a shared manner by a plurality of devices.

Moreover, in a case where one step includes a plurality of processes, the plurality of processes included in the one step may be executed by one device, or may be executed in a shared manner by a plurality of devices.

### - Exemplary configuration combination

The present technology may also have the following configurations.
(1) An information processing system including:
   a detection unit that detects an action of a user;
   a display processing unit that causes a GUI related to an operation using a gesture to be displayed on the basis of detection of a first gesture made by the user; and
   a control unit that identifies an operation presented on the GUI on the basis of a second gesture made following the first gesture and executes a control command corresponding to the identified operation.
(2) The information processing system according to (1) described above, in which
   the display processing unit causes the GUI in which a plurality of command icons corresponding to operation content of a device is arranged to be displayed.
(3) The information processing system according to (2) described above, in which
   the display processing unit causes the GUI that includes a first command icon, which is the command icon arranged at a position in a first direction with a reference position as a center, and a second command icon, which is the command icon arranged at a position in a second direction opposite to the first direction, to be displayed, and
   the control unit accepts the action toward the first direction or the action toward the second direction as the second gesture.
(4) The information processing system according to (3) described above, in which
   the first command icon and the second command icon are arranged linearly.
(5) The information processing system according to any one of (2) to (4) described above, in which
   the display processing unit causes a boundary of a region assigned to the operation indicated by each of the command icons to be displayed on the GUI.
(6) The information processing system according to any one of (2) to (5) described above, in which
   the control unit identifies the operation presented on the GUI in response to an action of moving a hand in a predetermined direction being performed as the second gesture following the first gesture made using the hand.
(7) The information processing system according to (6) described above, in which
   the control unit identifies the operation corresponding to the command icon arranged in the same direction as the predetermined direction.
(8) The information processing system according to (6) or (7) described above, in which
   the control unit identifies the operation presented on the GUI in response to the action in which a manner of moving a finger is different from the manner of moving the finger in the first gesture being performed as the second gesture.
(9) The information processing system according to any one of (6) to (8) described above, in which
   the display processing unit causes an icon that represents the first gesture to move in the same direction as the predetermined direction in response to the second gesture being made.
(10) The information processing system according to any one of (6) to (9) described above, in which
   the display processing unit presents the direction in which the second gesture is made by an image that indicates a track of movement of an icon that represents the first gesture or by an image that indicates the predetermined direction.
(11) The information processing system according to any one of (6) to (10) described above, in which
   the control unit repeatedly executes the control command in a case where a state in which the hand is moved in the predetermined direction is maintained.
(12) The information processing system according to any one of (2) to (11) described above, in which
   the display processing unit switches a type of the command icons included in the GUI depending on a state of the device to be controlled.
(13) The information processing system according to any one of (1) to (12) described above, in which
   the display processing unit terminates the display of the GUI in a case where an action different from the second gesture is performed during the display of the GUI.
(14) The information processing system according to any one of (1) to (13) described above, in which
   the display processing unit switches a display position of the GUI depending on content of video on which the GUI is superimposed and displayed.
(15) The information processing system according to any one of (2) to (14) described above, in which
   the display processing unit changes a size of the GUI depending on a distance to a part of the user used for the first gesture.
(16) The information processing system according to (15) described above, in which
   the display processing unit switches a type of the command icons or a number of the command icons included in the GUI depending on the distance to the part.
(17) The information processing system according to any one of (1) to (16) described above, in which
   the display processing unit presents the second gesture being recognized.
(18) The information processing system according to any one of (2) to (17) described above, in which
   in a case where the command icon related to control of an external device that serves as a source of video is selected by the second gesture, the display processing unit causes an icon that represents the external device to be displayed together with the GUI.
(19) The information processing system according to (18) described above, in which
   the display processing unit causes a preview image of the video output from the external device or an instruction command for the external device to be displayed together with the GUI.
(20) A control method for causing an information processing system to perform:
   detecting an action of a user;
   displaying a GUI related to an operation using a gesture on the basis of detection of a first gesture made by the user; and
   identifying an operation presented on the GUI on the basis of a second gesture made following the first gesture and executing a control command corresponding to the identified operation.

### REFERENCE SIGNS LIST

- 1: TV
- 11: Camera device
- 31: Image acquisition unit
- 32: Gesture recognition unit
- 51: Sensing data acquisition application
- 52: Gesture application
- 52A: Display processing unit
- 52B: Operation control unit

## Claims

1. An information processing system comprising:
a detection unit that detects an action of a user;
a display processing unit that causes a graphic user interface (GUI) related to an operation using a gesture to be displayed on a basis of detection of a first gesture made by the user; and
a control unit that identifies an operation presented on the GUI on a basis of a second gesture made following the first gesture and executes a control command corresponding to the identified operation.

2. The information processing system according to claim 1, wherein
the display processing unit causes the GUI in which a plurality of command icons corresponding to operation content of a device is arranged to be displayed.

3. The information processing system according to claim 2, wherein
the display processing unit causes the GUI that includes a first command icon, which is the command icon arranged at a position in a first direction with a reference position as a center, and a second command icon, which is the command icon arranged at a position in a second direction opposite to the first direction, to be displayed, and
the control unit accepts the action toward the first direction or the action toward the second direction as the second gesture.

4. The information processing system according to claim 3, wherein
the first command icon and the second command icon are arranged linearly.

5. The information processing system according to claim 2, wherein
the display processing unit causes a boundary of a region assigned to the operation indicated by each of the command icons to be displayed on the GUI.

6. The information processing system according to claim 2, wherein
the control unit identifies the operation presented on the GUI in response to an action of moving a hand in a predetermined direction being performed as the second gesture following the first gesture made using the hand.

7. The information processing system according to claim 6, wherein
the control unit identifies the operation corresponding to the command icon arranged in the same direction as the predetermined direction.

8. The information processing system according to claim 6, wherein
the control unit identifies the operation presented on the GUI in response to the action in which a manner of moving a finger is different from the manner of moving the finger in the first gesture being performed as the second gesture.

9. The information processing system according to claim 6, wherein
the display processing unit causes an icon that represents the first gesture to move in the same direction as the predetermined direction in response to the second gesture being made.

10. The information processing system according to claim 6, wherein
the display processing unit presents the direction in which the second gesture is made by an image that indicates a track of movement of an icon that represents the first gesture or by an image that indicates the predetermined direction.

11. The information processing system according to claim 6, wherein
the control unit repeatedly executes the control command in a case where a state in which the hand is moved in the predetermined direction is maintained.

12. The information processing system according to claim 2, wherein
the display processing unit switches a type of the command icons included in the GUI depending on a state of the device to be controlled.

13. The information processing system according to claim 1, wherein
the display processing unit terminates the display of the GUI in a case where an action different from the second gesture is performed during the display of the GUI.

14. The information processing system according to claim 1, wherein
the display processing unit switches a display position of the GUI depending on content of video on which the GUI is superimposed and displayed.

15. The information processing system according to claim 2, wherein
the display processing unit changes a size of the GUI depending on a distance to a part of the user used for the first gesture.

16. The information processing system according to claim 15, wherein
the display processing unit switches a type of the command icons or a number of the command icons included in the GUI depending on the distance to the part.

17. The information processing system according to claim 1, wherein
the display processing unit presents the second gesture being recognized.

18. The information processing system according to claim 2, wherein
in a case where the command icon related to control of an external device that serves as a source of video is selected by the second gesture, the display processing unit causes an icon that represents the external device to be displayed together with the GUI.

19. The information processing system according to claim 18, wherein
the display processing unit causes a preview image of the video output from the external device or an instruction command for the external device to be displayed together with the GUI.

20. A control method for causing an information processing system to perform:
detecting an action of a user;
displaying a GUI related to an operation using a gesture on a basis of detection of a first gesture made by the user; and
identifying an operation presented on the GUI on a basis of a second gesture made following the first gesture and executing a control command corresponding to the identified operation.
